# EUROPEAN PATENT APPLICATION

(11) **EP 4 776 588 A1**
(43) Date of publication of application: **15.07.2026**
(21) Application number: 25151758.7
(22) Date of filing: 14.01.2025
(51) Int. Cl.: H04L 41/0873, H04L 41/0894

(54) **DEVICE AND METHOD FOR HANDLING A MANAGING TASK OF A COMMUNICATION NETWORK**

(71) Applicant: NTT DOCOMO, INC., Tokyo 100-6150 (JP)
(72) Inventor: ÜSTOK, Refik Fatih, 80687 Munich (DE); KATSALIS, Konstantinos, 80687 Munich (DE); TRIAY MARQUES, Joan, 80687 Munich (DE); KUNO, Yuya, Tokyo, 100-6150 (JP)
(74) Representative: Viering, Jentschura & Partner mbB Patent- und Rechtsanwälte

(57) **Abstract**

According to one embodiment, a method for handling a managing task of a communication network is described, comprising receiving, by a management service provider, a specification of a managing task, wherein the specification includes requirements, including goals and/or constraints, of the managing task, determining, by the management service provider, one or more actions for performing the managing task including a setting of a configuration of one or more components of the communication network, performing detection of conflicts between the setting of the configuration and another configuration of the one or more components of the communication network set by a management function of the communication network, e.g. by querying a policy change information service for information about changes of policies in a policy management component, and performing an additional action in reaction to the detection of a conflict between the setting of the configuration and a configuration set by a management function of the communication network.

## Description

The present disclosure relates to devices and methods for handling a managing task of a communication network.

A communication system may include various automation functions to handle managing tasks such as resource allocation tasks, maintenance tasks, etc. Some of those can be implemented as part of an Intent Management Service (i.e. as an Intent Handler). Automation tasks may independently set configurations, e.g. update policies, to handle tasks. Accordingly, as multiple automation functions can update the same policies, they may create conflicts.

Approaches for handling this kind of conflict are desirable. Moreover, in case of conflicts among various automation functions, it may be desirable that, for example, the operator of the communication system is capable of resolving conflicts and/or is involved in resolving conflicts.

According to one embodiment, a method for handling a managing task of a communication network is provided, comprising receiving, by a management service provider, a specification of a managing task, wherein the specification includes requirements, including goals and/or constraints, of the managing task, determining, by the management service provider, one or more actions for performing the managing task including a setting of a configuration of one or more components of the communication network, performing detection of conflicts between the setting of the configuration and another configuration of the one or more components of the communication network set by a management function of the communication network and performing an additional action in reaction to the detection of a conflict between the setting of the configuration and a configuration set by a management function of the communication network.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a mobile radio communication system 100, for example configured according to 5G (Fifth Generation) as specified by 3GPP (Third Generation Partnership Project).
- Figure 2: shows an architecture including an intent handler.
- Figure 3: shows a flow diagram illustrating a procedure for handling an intent in the case of possible policy conflicts.
- Figure 4: illustrates an implementation option according to a 3GPP (Third Generation Partnership Project) system.
- Figure 5: illustrates two implementation options in an O-RAN (Open Radio Access Network) architecture.
- Figure 6: illustrates an implementation option in an ETSI (European Telecommunications Standards Institute) NFV (Network Functions Virtualisation) architecture.
- Figure 7: shows a flow diagram illustrating a method for handling a managing task of a communication network according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a method for handling a managing task of a communication network, comprising receiving, by a management service provider, a specification of a managing task, wherein the specification includes requirements, including goals and/or constraints, of the managing task, determining, by the management service provider, one or more actions for performing the managing task including a setting of a configuration of one or more components of the communication network, performing detection of conflicts between the setting of the configuration and another configuration of the one or more components of the communication network set by a management function of the communication network and performing an additional action in reaction to the detection of a conflict between the setting of the configuration and a configuration set by a management function of the communication network.

Example 2 is the method of example 1, wherein performing the additional action comprises checking whether the managing service provider has received a permission to perform a conflict resolving action and performing the conflict resolving action in reaction to the managing service provider having received the permission to perform the conflict resolving action.

Example 3 is the method of example 2, wherein the conflict resolving action comprises overwriting the other configuration by the configuration.

Example 4 is the method of example 2 or 3, wherein performing the additional action comprises informing a sender of the specification of the managing task (e.g. an intent owner) about the conflict in reaction to the managing service provider not having received the permission to perform the conflict resolving action.

Example 5 is the method of example 4, wherein performing the additional action comprises requesting the permission to perform the conflict resolving action from the sender of the specification of the managing task.

Example 6 is the method of example 4 or 5, wherein performing the additional action comprises receiving, from the sender of the specification of the managing task (e.g. intent owner), the permission to perform the conflict resolving action and performing the conflict resolving action in reaction to the reception of the permission to perform the conflict resolving action.

Example 7 is the method of any one of examples 1 to 3, wherein performing the additional action comprises informing a sender of the specification of the managing task (e.g. an intent owner) about the conflict.

Example 8 is the method of any one of examples 1 to 7, comprising performing the detection of conflicts before setting the configuration.

Example 9 is the method of any one of examples 1 to 8, comprising setting the configuration in reaction to a determination that there is no conflict between the setting of the configuration and a configuration set by a management function of the communication network.

Example 10 is the method of any one of examples 1 to 9, comprising performing the detection of conflicts after setting the configuration.

Example 11 is the method of example 10, wherein performing the detection of conflicts after setting the configuration comprises monitoring whether any management function of the communication network sets a configuration conflicting with the configuration.

Example 12 is the method of any one of examples 1 to 11, wherein the configuration and the other configuration are policies (e.g. quality of service policies, e.g. to meet a required latency, a traffic steering policy which can direct UE groups to connect to specific cells or frequency bands based on traffic patterns and/or load balancing, a policy for energy saving which can switch off certain cells, a beamforming adjustment policy which can improve coverage and capacity etc.).

Example 13 is the method of any one of examples 1 to 12, wherein performing detection of conflicts comprises querying a policy change information service for information about changes of policies in a policy management component (e.g. PMI SMOS or PCF).

Example 14 is a data processing arrangement configured to perform the method of any one of examples 1 to 13.

It should be noted that one or more of the features of any of the examples above may be combined with any one of the other examples. In particular, the Examples described in context of the method are analogously valid for the device (i.e. data processing arrangement).

According to further embodiments, a computer program and a computer readable medium comprising instructions, which, when executed by a computer, make the computer perform the method of any one of the above Examples are provided.

In the following, various examples will be described in more detail.

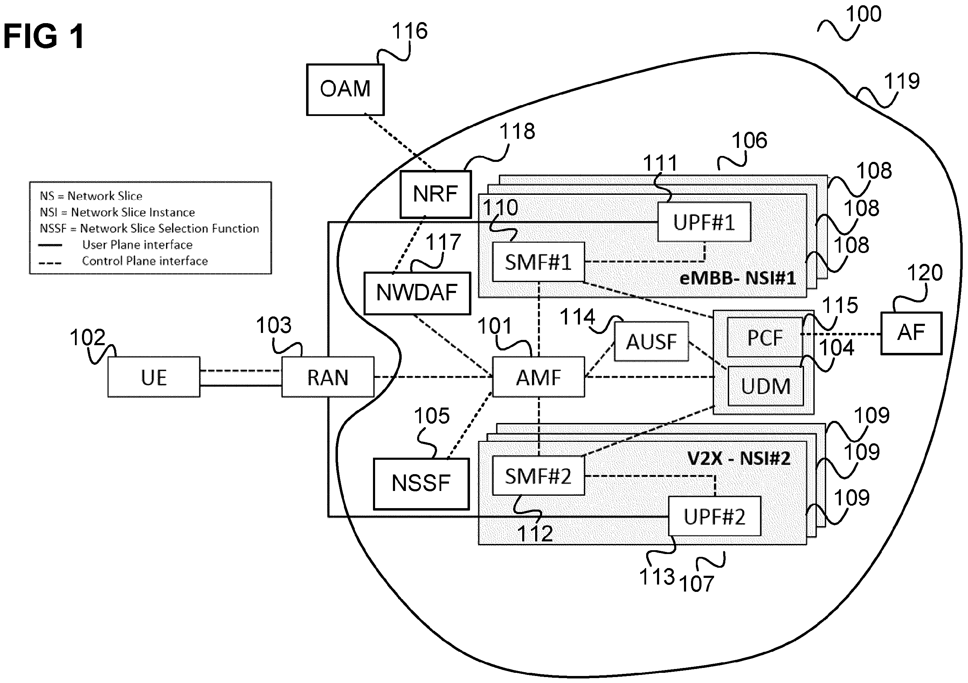

Figure 1 shows a mobile radio communication system 100, for example configured according to 5G (Fifth Generation) as specified by 3GPP (Third Generation Partnership Project).

The mobile radio communication system 100 includes a mobile radio terminal device 102 such as a UE (user equipment), and the like. The mobile radio terminal device 102, also referred to as subscriber terminal, forms the terminal side while the other components of the mobile radio communication system 100 described in the following are part of the mobile communication network side, i.e. part of a mobile communication network (e.g. a Public Land Mobile Network PLMN).

Furthermore, the mobile radio communication system 100 includes a Radio Access Network (RAN) 103, which may include a plurality of radio access network nodes, i.e. base stations configured to provide radio access in accordance with a 5G (Fifth Generation) radio access technology (5G New Radio). It should be noted that the mobile radio communication system 100 may also be configured in accordance with LTE (Long Term Evolution) or another mobile radio communication standard (e.g. non-3GPP accesses like Wi-Fi) but 5G is herein used as an example. Each radio access network node may provide a radio communication with the mobile radio terminal device 102 over an air interface. It should be noted that the radio access network 103 may include any number of radio access network nodes.

The mobile radio communication system 100 further includes a core network (5GC) 119 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network 119 further includes an AUSF (Authentication Server Function) 114, a PCF (Policy Control Function) 115 and an AF (application function) 120.

The core network 119 may have multiple core network slices 106, 107 and for each core network slice 106, 107, the operator (also referred to MNO for Mobile Network Operator) may create multiple core network slice instances 108, 109. For example, the core network 119 includes a first core network slice 106 with three core network slice instances (C-NSIs) 108 for providing Enhanced Mobile Broadband (eMBB) and a second core network slice 107 with three core network slice instances (NSIs) 109 for providing Vehicle-to-Everything (V2X).

Typically, when a core network slice is deployed (i.e. created), network functions (NFs) are instantiated, or (if already instantiated) referenced to form a core network slice instance and network functions that belong to a core network slice instance are configured with a core network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113. The SMFs 110, 112 are for handling PDU (Protocol Data Unit) sessions, i.e. for creating, updating and removing PDU sessions and managing session context with the User Plane Function (UPF).

The RAN 103 and the core network 119 form the network side of the mobile radio communication system, or, in other words, form the mobile radio communication network. The mobile radio communication network and the mobile terminals accessing the mobile radio communication network form, together, the mobile radio communication system.

Like the core network 119, the RAN 103 may also be sliced, i.e. include multiple RAN slices. A RAN slice and a core network slice 106, 107 may be grouped to form a network slice.

In the following, "network slice" (or just "slice") generally refers to a core network slice but may also include a RAN slice or even a transport network slice.

The mobile radio communication system 100 may further include an OAM (Operation, Administration and Maintenance) function (or entity) 116, e.g. implemented by one or more OAM servers which is connected to the RAN 103 and the core network 119 (connections are not shown for simplicity). The OAM 116 may include an MDAS (Management Data Analytics Service). The MDAS may for example provide an analytics report regarding network slice instance load. Various factors may impact the network slice instance load, e.g. number of UEs accessing the network, number of QoS flows, the resource utilizations of different NFs which are related with the network slice instance.

Further, the core network 118 includes an NRF (Network Repository Function).

The core network 119 may further include a Network Data Analytics Function (NWDAF) 117. The NWDAF is responsible for providing network analytics and/or prediction information upon request from network functions.

For a communication system like the one illustrated in figure 1, there are many management and control tasks (such as maintenance and resource allocation) to consider. One approach to handle these is intent-based (network) management.

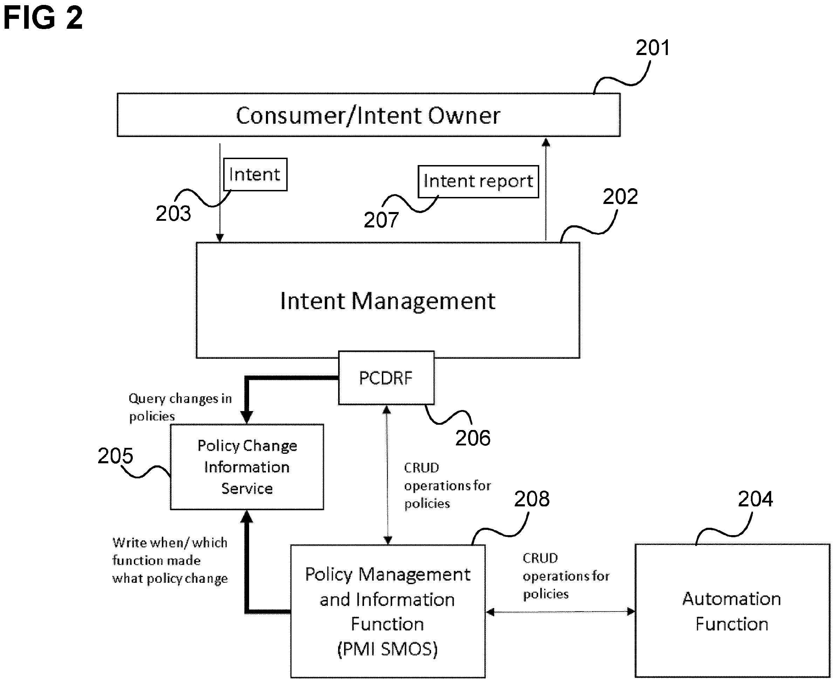

Figure 2 shows an architecture including an intent handler 202. The intent handler 202 acts as service producer for (i.e. provides) an intent-driven management service (IDMS).

An intent owner 201 provides an intent description 203, i.e. a description of an intent, to the intent handler 202 over a standardized interface. For example, for the case of 3GPP networks, see 3GPP TS 28.312 which defines an intent model including intent expectations as well as intent reports 207 that the intent handler 202 sends back to the intent owner 201. The intent description 203 includes requirements, including goals and/or constraints, of a managing activity. According to 3GPP, an intent is a specification of requirements, including goals and constraints, given to a system, without specifying how to achieve them. The intent handler 202 (intent handling function) receives intents, decides which actions must be taken to optimally fulfil all given intents and implements its decisions. The intent handler 202 has for example a knowledge base that contains the intent ontology. It can also have machine-reasoning capabilities to realize knowledge-driven decision-making processes.

Further, the following terms are defined in the context of intents according to 3GPP:
- Intent Expectation: In the most basic form, a consumer may use an intent to express to the producer the need for: "an object O with characteristics S" where the characteristics S reflect the requirements, goals and contexts for an object.
- Expectation Targets: For a given intent expectation, the desired characteristics of the object(s) are the expectation targets to be achieved (e.g. specified in the intent description 203). The expectation targets may include the metrics that characterize the performance of the object(s) or some abstract index that expresses the behaviour of the object(s). A given intent expectation may include multiple expectation targets on the same object or on different objects with the same properties.
- Expectation Objects: The object (s) for which a given expectation is addressed can be expressed with the object's identifier. This may, however, not always be adequate (e.g. if the consumer does not have or know the identifiers of the object) for some intents.
- Context: describes the applicability constraints and conditions that may apply to the intent and its information elements.
- FulfilmentInfo describes the fulfilment related information for an aspect of the intent (i.e. either an expectation, an expectation target, a condition or the whole intent).
- IntentReport (e.g. corresponding to the intent report 207) describes the information provided by the Intent Handler to the subscribing entity or Intent Owner about status and progress regarding the received intent.

The intent owner 201 can be seen as a MnS (management service) consumer of a management service that it requests by sending the intent description 203. It may be a device representing the mobile network operator (e.g. a data processing device reacting to inputs of operator personnel), a network function of the communication function, any other management function etc.

The intent handler 202 decides about and performs one or more actions for handling the intent. This may in particular include setting configurations like setting a policy, e.g. setting a quality of service (QoS), e.g. setting a 5QI value, for example to meet a latency included as an expectation in the intent description 203. Policies are used as an example in the following but the approaches described herein may be applied to all kinds of configurations. Policies are for example set in a Policy Management and Information (PMI) Function, e.g. a PMI SMOS (service management and orchestration system) 208 by means of lifecycle management (LCM) operations such as CRUD (create read update delete) operations.

According to ORAN (Open Radio Access Network), the PMI SMOS main capabilities include:
- Policy type registration and deregistration: A PMI SMOS consumer (e.g. intent handler 202 or other automation function 204) can request to create and register the policy types it supports with Policy Management and Information (PMI), also allows to delete and deregister policy types. Some examples of policy types can be resource management, LCM such as healing and scaling, monitoring etc.
- Discover and Query Policy types: A PMI SMOS consumer can request to discover, and query supported policy types.
- Create, Query/Read, Update, Delete policies: PMI SMOS consumers can request to create, query/read, update and delete policies for any SMOF (as well as A1 policies for the near-RT RIC) that is supporting the related policy types as known to the PMI SMOS.
- Discover Policies: A PMI SMOS consumer can request to discover policies maintained by PMI SMOS producer.
- Policy Status: PMI SMOS consumer request to query/read status of policies, such as enforced, running, not enforced etc. obtained by PMI SMOS producer from the PDPs and PEPs.
- Subscribe/Notify: A PMI SMOS consumer can subscribe for notifications of events such as policy changes related to policies and policy types

A communication system (e.g. communication system 100) may, in addition to the intent handler 202, include other automation functions performing tasks in the communication system, such as network functions, AI (artificial intelligence) models and CCLs (closed control loops). An automation function 204 may be understood as a management function for automation of management tasks or components of an automation architecture for communication network (e.g. 5G network) automation. Examples include a communication service management function (CSMF), a network slice management function (NSMF) and a network slice subnet management function (NSSMF).

Such an automation function 204 may also set configurations, in particular policies, that may conflict with a configuration (e.g. policy) set by the intent handler 201 to handle the intent described by the intent description 203.

So, an intent handler 202 and another automation functions can create conflicts by creating conflicting policies.

Conflicts created in this manner should be resolved and it is typically desirable that the MnS consumer, i.e. the intent owner 201, has control over a conflict in which an intent of the intent owner 201 is involved (due to the intent handler 202 setting a policy for handing the intent which is in conflict).

In view of the above, according to various embodiments, an entity is introduced which provides a service, referred to as policy change information service 205, which tracks when an automation function and which automation function makes changes to a policy and what has been changed. Further, according to various embodiments, an entity inside or outside the intent handler 202 for detecting and resolving policy conflicts (in the PMI SMOS 208 in the present example) is introduced, referred to as Policy Conflict Detection and Resolution Function (PCDRF) 206.

As mentioned above, the PCDRF 206 may be part (e.g. may be implemented by) the intent handler 202. It should be noted that intent handlers are suitable to facilitate operators involvement in resolution of conflicts among various automation functions as they can enable:
- Intent reports, with appropriate extensions, which can enable reporting conflicts among various automation functions after policy changes
- A negotiation procedure, with appropriate extensions, by which the operator can provide feedback regarding how to resolve conflicts among various automation functions
- An intent model, with appropriate extensions, where the operator can provide permissions to the intent handler to resolve the conflict automatically without the operator's involvement in case the operator does not have preferences on how to resolve the conflict.

According to various embodiments, the intent model and intent expectation model according to 3GPP may be extended to support conflict resolution. Further, the intent reports according to 3GPP may be extended to support reporting policy conflicts and enable negotiations with the MnS consumer 201.

More specifically, attributes may be added to the generic intent model to enable the MnS consumer 201 to be aware of conflict and give permission to intent handler to resolve a conflict and intent report attributes may be added to support reporting a conflict by the intent report 207 and enable negotiation to resolve the conflict.

Table 1 gives an example for an attribute added to the Intent IOC (Information Object Class) according to one embodiment.

**Table 1**

| **Attribute Name** | **Support Qualifier** | **isReada ble** | **isWrita ble** | **isInvari ant** | **isNotifya ble** |
|---|---|---|---|---|---|
| policyConflictResolution Permission | O | T | T | F | F |

Table 2 gives an example for an attribute added to the IntentExpectation «dataType» according to one embodiment.

**Table 2**

| **Attribute Name** | **Support Qualifier** | **isReada ble** | **isWrita ble** | **isInvari ant** | **isNotifya ble** |
|---|---|---|---|---|---|
| policyConflictResolution Permission | O | T | T | F | F |

These attributes can be used by the intent handler 201 to give a permission (to resolve the conflict, i.e. to perform or trigger a conflict resolving action), wherein the permission can be given per intent (see attribute of tale 1) or per expectation (see attribute of table 2). If the permission is given or not given per intent, it can overwrite the attribute giving or not giving the permission for each expectation.

If the permission is True, the intent handler 202 can for example initiate resolving the conflict via a PCDRF 206 which has the permission to overwrite and/or update the conflicting policy.

Table 3 gives an example for an attribute of IntentConflictReport included in the intent report model.

**Table 3**

| **Attribute Name** | **Support Qualifie r** | **isReadabl e** | **isWritabl e** | **isInvarian t** | **isNotifyabl e** |
|---|---|---|---|---|---|
| conflictingPolic y | CM | T | T | F | F |

The attribute conflictingPolicy is used then the conflictType in the intent report 207 (i.e. in IntentConflictReport) is set to POLICY_CONFLICT, see table 4.

**Table 4**

| | | |
|---|---|---|
| **conflictingPolicy** | ConflictingPolicy describes the Policy that is conflicting with intent handler action to fulfil the expectation. | type: String |
| | | multiplicity: 1 |
| | | isOrdered: N/A |
| | | isUnique: N/A |
| | | default Value: None |
| | allowedValues: Not Applicable | |
| | | isNullable: False |
| **conflictType** | It describes the type of intent conflict. | type: Enum |
| | allowedValues: INTENT_CONFLICT, | multiplicity: 1 |
| | EXPECTATION_CONFLICT, | isOrdered: N/A |
| | TARGET_CONFLICT, | isUnique: N/A |
| | **POLICY_CONFLICT** | default Value: None |
| | | isNullable: False |

When the intent handler 202 reports a conflict in the intent report 207, negotiations may be triggered in which the MnS consumer 201 decides to give permission to the intent handler 202 to overwrite policies (e.g. by the attributes of tables 1 or 2). The intent handler 202 can then resolve the conflict. If the MnS consumer 201 does not give the permission, the intent handler 202 can try to find another way to fulfil the intent to resolve the conflict or does not fulfil the intent (or one of its expectations) and reports accordingly.

Table 5 gives examples of information the policy change information service 205 exposes per policy.

**Table 5**

| **Attribute** | **Description** | **Properties** |
|---|---|---|
| Policy ID | Identification of the policy as exposed by Policy Management Function (PMI SMOS) | type: DN |
| | | multiplicity: 1 |
| | | isOrdered: N/A |
| | | isUnique: N/A |
| | | default Value: None |
| | | isNullable: True |
| Policy Version | Identification of version number | type: String |
| | | multiplicity: 1 |
| | | isOrdered: N/A |
| | | isUnique: N/A |
| | | default Value: None |
| | | isNullable: False |
| Change Summary | Explains what is changed in the policy | type: String |
| | | multiplicity: 1 |
| | | isOrdered: N/A |
| | | isUnique: N/A |
| | | default Value: None |
| | | isNullable: False |
| Change owner | Refers to entity that is responsible for the change in the policy | type: DN |
| | | multiplicity: 1 |
| | | isOrdered: N/A |
| | | isUnique: N/A |
| | | default Value: None |
| | | isNullable: False |

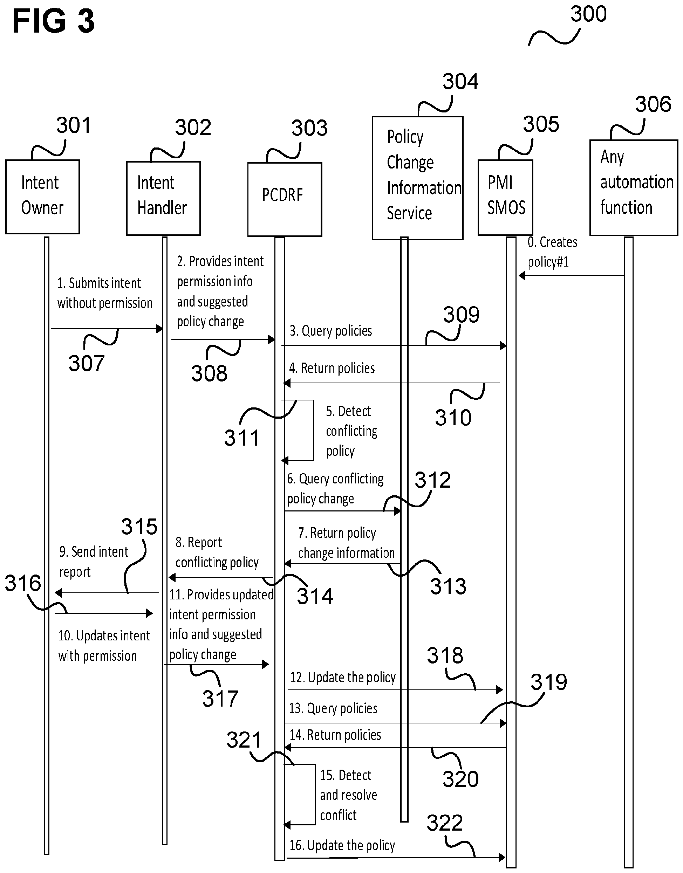

Figure 3 shows a flow diagram 300 illustrating a procedure for handling an intent in the case of possible policy conflicts.

An intent owner 301, an intent handler 302, a PCDRF (Policy Conflict Detection and Resolving Function) 303, a Policy Change Information Service 304, a PMI SMOS 305 and another automation function 306 (e.g. as described with reference to figure 2) are involved in the flow.

In 307, the intent owner 301 submits an intent to the intent handler 302. It is in this example assumed to not include a permission for the intent handler 302 to resolve a conflict (without consulting the intent owner 301, e.g. the permissions of table 2 or table 3 is set to False).

In 308, the intent handler 302 provides the intent permission information (i.e. the information that the intent handler 302 may not resolve the conflict (without consulting the intent owner 301) and a proposed policy change for handling the intent to the PCDRF 303. The proposed policy change is an action that the intent handler 302 determines for fulfilling the intent (or one of its expectations) in this example.

In 309, the PCDRF 303 queries policies currently set from the policy management function, i.e. the PMI SMOS 305 in this example. The PMI SMOS 305 provides corresponding information in response in 310.

In 311, the PCDRF 303 detects conflicting policies, i.e. determines whether there is a conflict between the proposed policy change and the policies currently set.

In case that there is a conflict, since the permission is not given in the present example, the PCDRF 303 may retrieve further information about the policy whose change causes the conflict from the Policy Change Information Service in 312 and 313 (e.g. which entity has set the policy to a setting which conflicts with the proposed policy change and when this was done).

In 314, the PCDRF 303 notifies the intent handler about the conflict.

The intent handler may try to find another action that can fulfil the intent (and, if it can find such an alternative action, fulfils the intent using the alternative action). Assuming that it does not find another action to fulfil the intent, it reports to the intent owner that the intent is not fulfilled in 315.

The intent owner 301 may then, in 316, update the intent with a permission to resolve the conflict, wherein in the present example, this permission includes that the policy may be changed as proposed by the intent handler 302.

In 317, the intent handler 302 provides information this permission to the PCDRF 303.

Optionally, the PCDRF 302 may try to resolve the conflict itself. If it does not find a way to resolve the conflict it, in 318, changes the policy in the PMI SMOS 305 as proposed by the intent handler 302.

If the permission was given in the original intent in 307, the PCDRF 302 may omit 312 to 317, i.e. it may directly try to resolve the conflict and, if not possible, change the policy in the PMI SMOS 305 as proposed by the intent handler 302.

The PCDRF 302 may continuously monitor policy changes in the PMI SMOS in 319 and 320 and detect any conflicts in 321 (e.g. a policy change that is not in line with the policy change proposed by the intent handler 302). If, as in the depicted flow, the permission was given by then, the PCDRF 302 may then directly change the policy back as proposed by the intent handler 302 in 322.

If the permission was not given by that time (e.g. because there was no initial conflict detected in 311), the PCDRF 302 may proceed as for the case that a conflict is detected in 311, i.e. 312 to 317 are performed (by the PCDRF 303, the Policy Change Information Service 304, the intent handler 302 and the intent owner 301, respectively).

Similarly, the intent handlers 302 can continuously monitor intents and expectations. If any other automation functions updates a policy conflicting with any intent (and causing a degradation of goals of the intent), the intent handler 302 can detect the degradation and perform 308 (causing the execution of the subsequent steps as described above).

If conflicting policies continuously occur (e.g. the automation function 306 and the PCDRF 303 repeatedly change a policy in a ping-pong manner), the PCDRF 303 may inform the intent owner 301 or any other system accordingly and the intent owner 301 or the other system can then trigger troubleshooting.

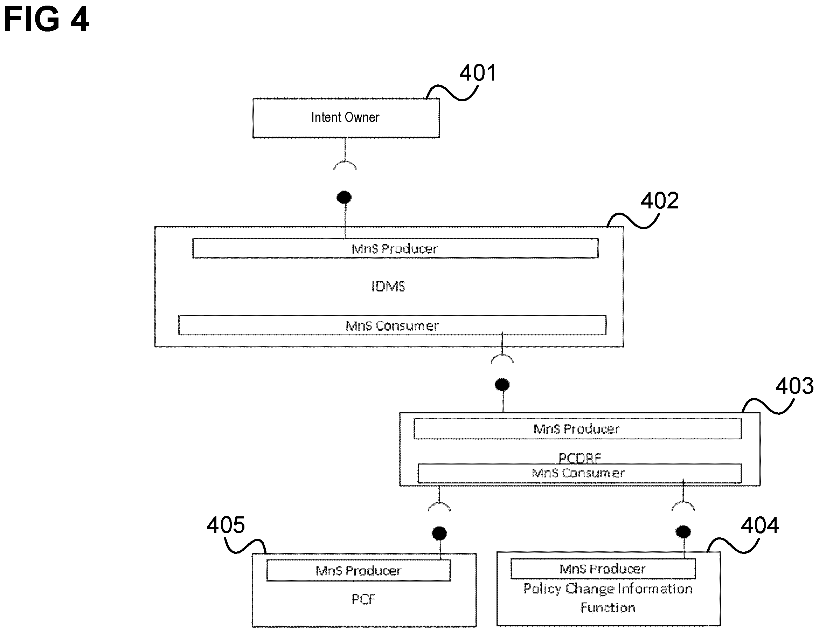

Figure 4 illustrates an implementation option according to a 3GPP system.

In this embodiment, the intent handler 402 acts as management service (MnS) producer with regard to the intent owner 401 and as an MnS consumer with regard to the PCDRF 403.

The PCDRF 403 acts as MnS producer with regard to the intent handler 402 and as MnS consumer with respect to the Policy Change Information function 404 and a PCF (Policy Control Function) 405.

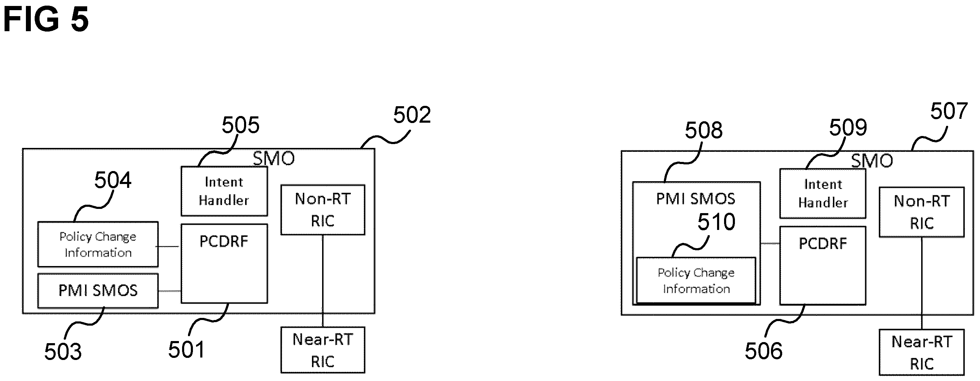

Figure 5 illustrates two implementation options in an O-RAN (Open RAN) architecture.

In a first option, the PCDRF 501 is part of an SMO (Service Management and Orchestration) 502 which also includes the PMI SMOS 503 and the Policy Change Information Service 504 and the intent handler 505 (as separate entities).

In a second option, the PCDRF 506 is also part of an SMO (Service Management and Orchestration) 507 which also includes the PMI SMOS 508 and the intent handler 509 but the Policy Change Information Service 510 is part of the PMI SMOS 508.

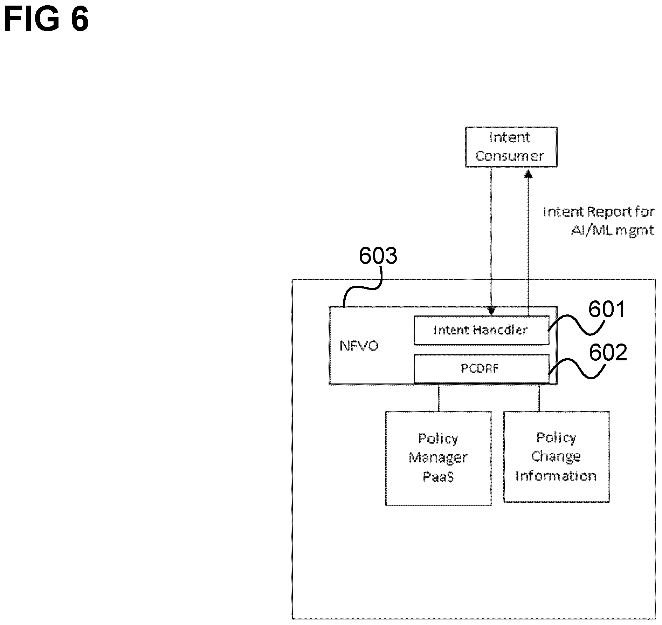

Figure 6 illustrates an implementation option in an ETSI (European Telecommunications Standards Institute) NFV (Network Functions Virtualisation) architecture.

In this option, the intent handler 601 and the PCDRF 602 are part of an NFVO (NFV Orchestrator) 603.

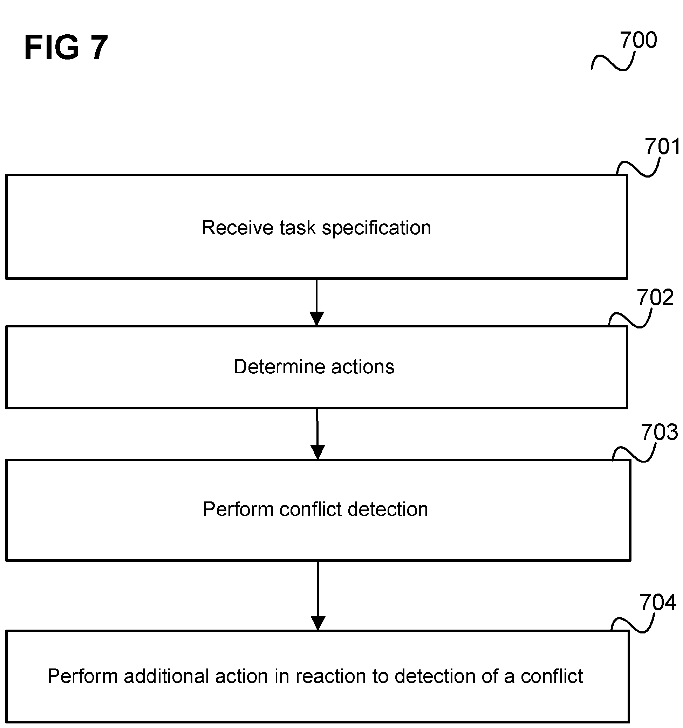

In summary, according to various embodiments, a method is provided as illustrated in figure 7.

Figure 7 shows a flow diagram 700 illustrating a method for handling a managing task of a communication network according to an embodiment.

In 701, a management service provider (e.g. an intent handler) receives a specification of a managing task, wherein the specification includes requirements, including goals and/or constraints, of the managing task.

In 702 the management service provider determines one or more actions for performing the managing task including a setting of a configuration of one or more components of the communication network.

In 703, detection of conflicts between the setting of the configuration and another configuration of the one or more components of the communication network set by a management function of the communication network is performed. In other words, the method comprises checking whether there is a conflict between the setting of the configuration and a configuration set by a management function of the communication network. This may be done by a component of the management service provider or by a separate component.

In 704, an additional action is performed in reaction to the detection of a conflict between the setting of the configuration and a configuration set by a management function of the communication network. The additional action may be determined (and its execution may be triggered) by the management service provider. Alternatively, in particular if the detection of conflicts is performed by a separate component, a component may determine the additional action and trigger its execution. The execution of the additional action may also replace the execution of the one or more actions (i.e. the one or more actions are for example not performed when a conflict is detected).

According to various embodiments, in other words, a management service provider (or an associated component) of a communication network performs conflict checking between a configuration the management service provider has decided to set or has set for handling a management task (e.g. an intent) and, in case of a conflict, informs a sender of the task (i.e. an entity that has requested that the task is performed), e.g. an intent owner, and/or resolves the conflict (if it has permission to do so). Processing tasks may thus be automatically handled while malfunctions due to conflicts can be avoided.

The method is for example performed by a data processing arrangement (i.e. data processing system comprising one or more data processing devices, e.g. of the communication system 100 or the communication network 200 as described above, see also the implementation examples of figures 4 to 6). The data processing devices may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A method for handling a managing task of a communication network, comprising:
receiving, by a management service provider, a specification of a managing task, wherein the specification includes requirements, including goals and/or constraints, of the managing task;
determining, by the management service provider, one or more actions for performing the managing task including a setting of a configuration of one or more components of the communication network;
performing detection of conflicts between the setting of the configuration and another configuration of the one or more components of the communication network set by a management function of the communication network; and
performing an additional action in reaction to the detection of a conflict between the setting of the configuration and a configuration set by a management function of the communication network.

2. The method of claim 1, wherein performing the additional action comprises checking whether the managing service provider has received a permission to perform a conflict resolving action and performing the conflict resolving action in reaction to the managing service provider having received the permission to perform the conflict resolving action.

3. The method of claim 2, wherein the conflict resolving action comprises overwriting the other configuration by the configuration.

4. The method of claim 2 or 3, wherein performing the additional action comprises informing a sender of the specification of the managing task about the conflict in reaction to the managing service provider not having received the permission to perform the conflict resolving action.

5. The method of claim 4, wherein performing the additional action comprises requesting the permission to perform the conflict resolving action from the sender of the specification of the managing task.

6. The method of claim 4 or 5, wherein performing the additional action comprises receiving, from the sender of the specification of the managing task, the permission to perform the conflict resolving action and performing the conflict resolving action in reaction to the reception of the permission to perform the conflict resolving action.

7. The method of any one of claims 1 to 3, wherein performing the additional action comprises informing a sender of the specification of the managing task about the conflict.

8. The method of any one of claims 1 to 7, comprising performing the detection of conflicts before setting the configuration.

9. The method of any one of claims 1 to 8, comprising setting the configuration in reaction to a determination that there is no conflict between the setting of the configuration and a configuration set by a management function of the communication network.

10. The method of any one of claims 1 to 9, comprising performing the detection of conflicts after setting the configuration.

11. The method of claim 10, wherein performing the detection of conflicts after setting the configuration comprises monitoring whether any management function of the communication network sets a configuration conflicting with the configuration.

12. The method of any one of claims 1 to 11, wherein the configuration and the other configuration are policies.

13. The method of any one of claims 1 to 12, wherein performing detection of conflicts comprises querying a policy change information service for information about changes of policies in a policy management component.

14. A data processing arrangement configured to perform the method of any one of claims 1 to 13.

## Amended claims

### Amended claims in accordance with Rule 137(2) EPC.

1. A method for handling a managing task of a communication network (200), comprising:
receiving (701), by a management service provider (202, 302, 505, 509, 601), a specification (203) of a managing task, wherein the specification (203) includes requirements, including goals and/or constraints, of the managing task;
determining (702), by the management service provider (202, 302, 505, 509, 601), one or more actions for performing the managing task including a setting of a configuration of one or more components of the communication network (200);
performing detection (703) of conflicts between the setting of the configuration and another configuration of the one or more components of the communication network (200) set by a management function of the communication network (200); and
performing an additional action (704) in reaction to the detection of a conflict between the setting of the configuration and another configuration set by the management function of the communication network (200), wherein performing the additional action comprises checking whether the managing service provider (202, 302, 505, 509, 601) has received a permission to perform a conflict resolving action and performing the conflict resolving action in reaction to the managing service provider (202, 302, 505, 509, 601) having received the permission to perform the conflict resolving action, wherein the conflict resolving action comprises overwriting the other configuration by the configuration.

2. The method of claim 1, wherein performing the additional action comprises informing a sender of the specification (203) of the managing task about the conflict in reaction to the managing service provider (202, 302, 505, 509, 601) not having received the permission to perform the conflict resolving action.

3. The method of claim 2, wherein performing the additional action comprises requesting the permission to perform the conflict resolving action from the sender of the specification (203) of the managing task.

4. The method of claim 2 or 3, wherein performing the additional action comprises receiving, from the sender of the specification (203) of the managing task, the permission to perform the conflict resolving action and performing the conflict resolving action in reaction to the reception of the permission to perform the conflict resolving action.

5. The method of claim 1, wherein performing the additional action comprises informing a sender of the specification (203) of the managing task about the conflict.

6. The method of any one of claims 1 to 5, comprising performing the detection of conflicts before setting the configuration.

7. The method of any one of claims 1 to 6, comprising setting the configuration in reaction to a determination that there is no conflict between the setting of the configuration and a configuration set by a management function of the communication network (200).

8. The method of any one of claims 1 to 7, comprising performing the detection of conflicts after setting the configuration.

9. The method of claim 8, wherein performing the detection of conflicts after setting the configuration comprises monitoring whether any management function of the communication network (200) sets a configuration conflicting with the configuration.

10. The method of any one of claims 1 to 9, wherein the configuration and the other configuration are policies.

11. The method of any one of claims 1 to 10, wherein performing detection of conflicts comprises querying a policy change information service for information about changes of policies in a policy management component.

12. A data processing arrangement comprising one or more data processing devices configured to perform the method of any one of claims 1 to 11.
